# EUROPÄISCHE PATENTANMELDUNG

(11) **EP 3 287 374 A1**
(43) Veröffentlichungstag der Anmeldung: **28.02.2018**
(21) Anmeldenummer: 17182798.3
(22) Anmeldetag: 24.07.2017
(51) Int. Cl.: B65B 11/38, B65B 25/00, B65B 35/54, B65B 65/00, A23G 7/00

(54) **VERFAHREN UND VORRICHTUNG ZUR VERPACKUNG VON, INSBESONDERE KLEINSTÜCKIGEN, PRODUKTEN**

(30) Priorität: 23.08.2016 DE 102016115635
(71) Anmelder: THEEGARTEN-PACTEC GMBH & CO. KG, 01237 Dresden (DE)
(72) Erfinder: Oehlert, Volker, 01809 Dohna/Röhrsdorf (DE)
(74) Vertreter: Grünecker Patent- und Rechtsanwälte PartG mbB

(57) **Zusammenfassung**

Die vorliegende Erfindung betrifft ein Verfahren und eine Vorrichtung zur Verpackung von, insbesondere kleinstückigen, Produkten, wie Hart- oder Weichkaramellen, Kaugummi, Pralinen oder dergleichen.

Um die bekannten Verfahren zur Verpackung von, insbesondere kleinstückigen, Produkten, wie Hart- oder Weichkaramellen, Kaugummi, Pralinen oder dergleichen, dahingehend weiterzuentwickeln, um eine Sekundärverpackung von in Produktformationen gruppierten, primärverpackten Produkten im Hochleistungssegment zu ermöglichen, umfasst das erfindungsgemäße Verfahren die folgenden Schritte:
- Schritt A: Primärverpackung der Produkte (P) in einer Mehrzahl von Produktströmen (A, B).
- Schritt B: Zusammenführung der Mehrzahl von Produktströmen (A, B) zu einem gemeinsamen Produktstrom (C).
- Schritt C: Sekundärverpackung von primärverpackten und in Produktformationen (PF) gruppierten Produkten (P) in dem gemeinsamen Produktstrom (PF).

## Beschreibung

Die vorliegende Erfindung betrifft ein Verfahren und eine Vorrichtung zur Verpackung von, insbesondere kleinstückigen, Produkten, wie Hart- oder Weichkaramellen, Kaugummi, Pralinen oder dergleichen.

Kleinstückige Produkte, wie bspw. Kaubonbons, die gewöhnlich eine quaderförmige Gestalt aufweisen, werden üblicherweise einzeln verpackt (Primärverpackung), in Produktformationen gruppiert und anschließend mit einer zweiten Verpackung (Sekundärverpackung) weiterverpackt.

Auf dem Gebiet der, insbesondere nach dem kontinuierlichen oder intermittierenden Prinzip arbeitenden, Hochleistungs-Verpackungsmaschinen für kleinstückige Produkte, wie Süßwaren, die, je nach Produkt und gewünschtem Erscheinungsbild in einer Vielzahl unterschiedlicher Faltungen, wie z.B. Päckchen-, Brief- oder Säckchenfaltung oder z.B. Verpackungen mit einem Dreheinschlag oder einem Doppeldreheinschlag verpackt werden, geht das Bestreben einerseits nach raschem Formatwechsel bzw. einfache Umrüstbarkeit auf unterschiedliche Faltungsarten, andererseits auf höhere Leistungen. Diese liegen derzeit im Bereich von 1500 bis 2000 verpackten Artikeln pro Minute.

Weiteren Leistungserhöhungen sind bei diesen schnell laufenden, kontinuierlich oder intermittierend arbeitenden Maschinen Grenzen gesetzt, bedingt durch Massenkräfte rotierender Massen, eine präzise Synchronisation von Produktzuführung und -Vereinzelung und Packmittelzufuhr, der Ableitung der Steuerungsbewegungen für die die Produkte klemmenden Haltebackenpaare, Haltemittel-Klemmeinrichtungen wie Packmittelzangen und der Steuerung der Verpackungsorgane selbst, in der Regel auf der Grundlage stehender Achsen und rotierender Nockenfolger.

Der Kostendruck in der Fertigungsindustrie, insbesondere bei Lebensmitteln, erzeugt ein Bedürfnis nach schneller Fertigung zu besonders geringen Stückkosten.

Der Erfindung liegt demnach die Aufgabe zu Grunde, die bekannten Verfahren und Vorrichtungen zur Verpackung von, insbesondere kleinstückigen, Produkten, wie Hart- oder Weichkaramellen, Pralinen oder dergleichen, dahingehend weiterzuentwickeln, um eine Sekundärverpackung von in Produktformationen gruppierten, primärverpackten Produkten im Hochleistungssegment zu ermöglichen.

Die Aufgabe der Erfindung wird hinsichtlich des Verfahrens gelöst durch das Verfahren nach Anspruch 1. Das erfindungsgemäße Verfahren zur Verpackung von, insbesondere kleinstückigen, Produkten, vorzugsweise Süßwaren, wie Hart- oder Weichkaramellen, Pralinen oder dergleichen, umfasst die folgenden Schritte:
- Schritt A: Primärverpackung der Produkte in einer Mehrzahl von Produktströmen.
- Schritt B: Zusammenführung der Mehrzahl von Produktströmen zu einem gemeinsamen Produktstrom.
- Schritt C: Sekundärverpackung von primärverpackten und in Produktformationen gruppierten Produkten in dem gemeinsamen Produktstrom.

Bei der Primärverpackung gibt es einen Verpackungsvorgang pro Produkt, während bei der Sekundärverpackung lediglich ein Verpackungsvorgang pro Produktformation anfällt. Da eine Produktformation mehrere Produkte umfasst, ist die Anzahl von Verpackungsvorgängen bei der Primärverpackung naturgemäß höher als bei der Sekundärverpackung. Nach dem erfindungsgemäßen Verfahren werden die Primärverpackung und die Sekundärverpackung deshalb in unterschiedlichen Produktströmen durchgeführt, um die Einzelverpackungsleistungen von Primar- und Sekundärverpackungseinrichtungen ideal aufeinander abzustimmen. Im Hinblick auf die Optimierung der Gesamtverpackungsleistung erweist es sich von Vorteil, dass die Primärverpackung der einzelnen Produkte in einer Mehrzahl von Produktströmen erfolgt, wobei diese Mehrzahl von Produktströmen dann zur Sekundärverpackung der in Produktformationen gruppierten Produkte zusammengeführt werden. Die Produkte können vor oder nach der Zusammenführung der Mehrzahl von Produktströmen zu einem gemeinsamen Produktstrom in Produktformationen gruppiert werden. Der Zeitpunkt der Gruppierung der Produkte in Produktformationen ist dabei nicht entscheidend. Aus verfahrenstechnischen Gründen ist es einfacher, die Produkte zuerst zu gruppieren und erst anschließend die Mehrzahl von Produktströmen zu einem gemeinsamen Produktstrom zusammenzuführen. Vorzugsweise ist die Anzahl der Produktströme in Schritt A des erfindungsgemäßen Verfahrens kleiner oder gleich der Anzahl der in einer Produktformation enthaltenen Produkte. Aus logistischen Gründen ist es vergleichsweise einfach, jeweils zwei Produktströme zu einem gemeinsamen, vorzugsweise dazwischen liegenden, Produktstrom zu vereinen. In diesem Zusammenhang kann es sich als sinnvoll erweisen, wenn die Anzahl der Produktströme in Schritt A des erfindungsgemäßen Verfahrens zwei, vier, acht oder 16 entspricht, wobei mehr als zwei Produktströme ggf. in mehreren Schritten bzw. wiederholter Ausführung des Schritts B zusammengeführt werden können.

Im Rahmen des Schritts A wird eine Mehrzahl von Produktströmen durch die erste Primärverpackungseinrichtung geführt und zwar vorzugsweise parallel, vorzugsweise gleichzeitig und vorzugsweise in übereinstimmender Zuführungsrichtung. Die Primärverpackungseinrichtung arbeitet vorzugsweise nach dem kontinuierlichen oder intermittierenden Prinzip, wobei die Produkte in einer Mehrzahl von, vorzugsweise wenigstens teilweise parallelen, Produktströmen mittels zumindest einem rotierenden Kopf, üblicherweise mittels einer Mehrzahl rotierender Köpfe, verpackt werden. Dadurch vervielfacht sich die Verpackungsleistung gegenüber einbahnigen Verpackungsmaschinen entsprechend der Anzahl der Produktströme.

Es können insbesondere auch mehr als zwei Produktströme durch die Primärverpackungseinrichtung hindurchgeführt und verpackt werden.

Insbesondere in Verbindung mit unterschiedlichen Zuführungsprinzipien, z.B. Strangzuführeinrichtung mit Trennvorrichtung und z.B. Aufteilung auf mehrere Produktströme, oder bei Entnahme aus einem Vereinzelungsteller oder linearer Zuführung mittels Zuführungsband oder -kette, aber auch bei übereinstimmender Zuführung, kann auch eine Kombination einer getakteten, diskontinuierlichen Verfahrensführung mit einer kontinuierlichen oder intermittierenden Verfahrensführung vorgesehen sein.

Das erfindungsgemäße Verpackungsverfahren ist unabhängig von der gewählten Faltungsart für die Verpackung in der Primär- und/oder der Sekundärverpackungseinrichtung oder von der Anzahl der im Rahmen des bevorzugten, kontinuierlichen Prinzips verwendeten Köpfe oder Räder. Das Prinzip der Erfindung kann demnach für eine Einkopf- oder Zweikopfmaschine ebenso wie für eine Drei- oder Mehrkopfmaschine verwendet werden (und zwar mit unterschiedlicher Zahl von Köpfen auch für jeden Produktstrom), wobei insbesondere ein rotierendes Entnahmerad mit einer Mehrzahl von Sätzen von Entnahmeeinheiten, von denen jeder Satz einem Produktstrom zugeordnet ist, oder eine Mehrzahl von Entnahmerädern mit jeweils einem Satz von Entnahmeeinheiten, zugeordnet einem Produktstrom, vorgesehen ist/sind.

Entsprechend sind in allen betroffenen Prozessschritten für jeden Produktstrom die erforderlichen Produkt/Packstoff-Halteelemente vorgesehen, also bei Verwendung einer Übergabevorrichtung (Greiferrad) für jeden Produktstrom entsprechende Haltebackenpaare mit diesen zugeordneten Packstoff-Klemmeinrichtungen bei kontinuierlicher Arbeitsweise bzw. Sätze von Verpackungseinheiten in der nachgeordneten Packvorrichtung für jeden Produktstrom. In Schritt A des erfindungsgemäßen Verfahrens können vorzugsweise Produkte in einer Mehrzahl von Produktströmen parallel, vorzugsweise in gleicher Weise gefördert bzw. primärverpackt werden. Die Produktströme sind vorzugsweise gleichartig. Es können diese aber auch aus unterschiedlichen Produkten gebildet werden, die in verschiedenen Verpackungsverfahren, Falt- oder Einschlagarten verpackt werden.

Innerhalb des Schritts A des erfindungsgemäßen Verfahrens bzw. der Primärverpackungseinrichtung der erfindungsgemäßen Vorrichtung können die Produkte eines Produktstromes und diejenigen eines anderen Produktstromes kontinuierlich oder intermittierend, vorzugsweise gleichzeitig, verpackt werden. Vorzugsweise kann dabei auch eine nach dem kontinuierlichen Prinzip (kontinuierlicher Produktdurchlauf) arbeitende Primärverpackungseinrichtung mit einer diskontinuierlich arbeitenden Sekundärverpackungseinrichtung/Verpackungsmaschine in Linie verkettet sein.

Durch die Erfindung kann generell leistungssteigernd eine Kombination kontinuierlicher leitender Verpackungseinrichtungen mit diskontinuierlich leitenden Aggregaten sowohl für sämtliche mehrbahnige Produktströme auch nur für einen Teil von ihnen vorgesehen werden. So kann beispielsweise der Primärverpackungsprozess intermittierend sein und/oder der Sekundärverpackungsprozess auch kontinuierlich (FlowPack). Die intermittierenden Aggregate können beispielsweise die Sekundärverpackungseinrichtung/Umverpackungseinrichtungen, Stapelpacker mit Anstapelvorrichtungen, Verschlusseinrichtungen, wie Längs- oder Quersiegeleinrichtungen, insbesondere auf thermischer oder Ultraschallbasis, vorzugsweise für das Siegeln von Flossen von Schlauchbeutelverpackungen oder dergleichen, oder auch Endverschlusseinrichtungen (Kalt- oder Heißsiegeln) oder auch klebergestütztes Haftverbinden (Verschließen) von Packstoffen, ggf. auch mittels Ultraschall sein. Die mehrbahnige, vorzugsweise gleichzeitig-parallele, Verarbeitung von zumindest zwei Produktströmen sowie deren Zusammenführung zur nachgelagerten Umverpackung von in Produktformationen gruppierten Produkten führt zur drastischen Leistungssteigerung hinsichtlich der Bereitstellung von endverpackten Produkten, insbesondere von in Sammelverpackungen vereinigten Produktformationen.

Weiterbildungen der Erfindung sind Gegenstände der Unteransprüche.

Es kann von Vorteil sein, wenn Schritt A wenigstens einen der folgenden Teilschritte aufweist:
- Teilschritt A1: Vereinzelung der Produkte, vorzugsweise aus jeweils einem eigenen Materialvorrat für jeden Produktstrom oder einem gemeinsamen Materialvorrat für die Mehrzahl von Produktströmen. Die Vereinzelung der Produkte aus einem gemeinsamen Materialvorrat gestattet die größtmögliche Homogenität der Produkte im Hinblick auf die Materialzusammensetzung. Die Vereinzelung der Produkte aus eigenen Materialvorräten für unterschiedliche Produktströme kann sich im Hinblick auf die Prozessgeschwindigkeit vorteilhaft auswirken.
- Teilschritt A2: Kontinuierliche oder intermittierende Förderung der vereinzelten Produkte in der Mehrzahl von Produktströmen, vorzugsweise entlang zumindest abschnittsweise paralleler und/oder zumindest abschnittsweise linearer oder kreisförmiger Bewegungsbahnen, bevorzugt mit gleicher Vorschubgeschwindigkeit. Dieser Teilschritt erleichtert die gleichzeitige Verpackung und/oder Gruppierung der Produkte sowie die Handhabung der Produkte für die nachgelagerten Bearbeitungsschritte.

- Teilschritt A3: Zuführung von Primärpackmittel zu den vereinzelten Produkten, vorzugsweise von jeweils einem eigenen Packmittelstrom zu jeweils einem Produktstrom oder von einem gemeinsamen Packmittelstrom zu der Mehrzahl von Produktströmen, bevorzugt während des Teilschritts A2. Die Verwendung eines gemeinsamen Packmittelstroms für unterschiedliche Produktströme kann aus logistischen Gründen vorteilhaft sein, während sich die Verwendung unterschiedlicher Packmittelströme für unterschiedliche Produktströme gegebenenfalls im Hinblick auf die Prozessgeschwindigkeit vorteilhaft auswirken kann.
- Teilschritt A4: Primärverpackung jedes vereinzelten Produkts, vorzugsweise jeweils in einem vereinzelten Primärpackmittel, wobei das Primärpackmittel bevorzugt vor oder nach der Zuführung zu dem Produkt vereinzelt wird, besonders bevorzugt während des Teilschritts A2. Die Vereinzelung des Primärpackmittels vor der Zuführung zu dem Produkt erlaubt eine höhere Flexibilität bei der Faltung des Packmittels. Wird das Primärpackmittel erst nach der Zuführung zu dem Produkt vereinzelt bzw. von dem Packmittelstrom getrennt, so ist zumindest der noch mit dem Packmittelstrom verbundene Teil des Packmittels während der Zuführung zu dem Produkt fixiert und bedarf keiner eigenen Handhabung. Die Primärverpackung kann in unterschiedlichen Falt-/Einschlagarten erfolgen, wie z.B. Päckchen-, Seiten-, oder Brieffaltung. Das Primärpackmittel ist vorzugsweise luftdicht, faltbar und siegelfähig (heiß oder kalt).
- Teilschritt A5: Versiegelung der Primärverpackung in der Mehrzahl von Produktströmen, vorzugsweise bei kontinuierlicher oder intermittierender Förderung der Produkte entlang zumindest abschnittsweise paralleler und/oder linearer und/oder horizontaler Bewegungsbahnen, bevorzugt mit gleicher Vorschubgeschwindigkeit. Durch die Siegelung kann eine dichte Primärverpackung bewerkstelligt werden. Die Förderung der Produkte auf parallelen und/oder linearen und/oder horizontalen Siegelstrecken kann die Handhabung der Produkte in nachgelagerten Bearbeitungsschritten vereinfachen.

Es kann sich als nützlich erweisen, wenn Schritt B wenigstens einen der folgenden Teilschritte aufweist:
- Teilschritt B1: Gruppierung von primärverpackten Produkten in Produktformationen aus vorzugsweise jeweils zwei bis sechzehn Produkten, bevorzugt unter Ausführung wenigstens eines der folgenden Teilschritte:
   ∘ Teilschritt B1-1: Veränderung der Bewegungsgeschwindigkeit der Produkte innerhalb der Mehrzahl von Produktströmen, vorzugsweise im Einzeltakt und/oder gleichzeitig für jeden Produktstrom. Durch Veränderung, insbesondere Verringerung, der Bewegungsgeschwindigkeit der Produkte innerhalb eines Produktstroms lässt sich auf einfache Weise ein Produktstau und eine Gruppierung der Produkte in Produktformationen erzeugen.
   ∘ Teilschritt B1-2: Veränderung der Bewegungsrichtung der Produkte innerhalb der Mehrzahl von Produktströmen von einer ersten Bewegungsrichtung zu einer zweiten Bewegungsrichtung, vorzugsweise im Einzeltakt und/oder gleichzeitig für jeden Produktstrom, wobei die zweite Bewegungsrichtung vorzugsweise quer oder senkrecht zur ersten Bewegungsrichtung und/oder zumindest teilweise oder exakt in vertikaler Richtung verläuft, wobei die zweite Bewegungsrichtung für unterschiedliche Produktströme vorzugsweise im Wesentlichen oder exakt parallel zueinander verläuft, wobei die Veränderung der Bewegungsrichtung bevorzugt gleichzeitig mit einer Veränderung der Vorschubgeschwindigkeit erfolgt. Eine Veränderung der Bewegungsrichtung des Produkts soll im Rahmen dieser Beschreibung bedeuten, dass sich der Vektor der Bewegungsrichtung in Bezug auf ein produkteigenes Koordinatensystem verändert. Im Falle von Produktformationen bezieht sich eine Änderung der Bewegungsrichtung auf ein produktformationsspezifisches Koordinatensystem. Auf einer linearen oder nichtlinearen Bewegungsbahn ändert sich die Bewegungsrichtung eines Produkts oder einer Produktformation in der Regel nicht, soweit dies nicht ausdrücklich angezeigt ist. Insbesondere bei einer nichtlinearen Bewegungsbahn wird die Ausrichtung des Produkts oder der Produktformation in der Regel an den Verlauf der Bewegungsbahn angepasst. Durch eine Veränderung der Bewegungsrichtung der Produkte lassen sich spezifische Produktformationen, insbesondere stapelförmige Produktformationen, auf einfache Weise erzeugen.
   ∘ Teilschritt B1-3: Stapelung der Produkte in wenigstens einem Stapelmagazin, vorzugsweise in jeweils einem eigenen Stapelmagazin für jeden Produktstrom, bevorzugt derart, dass eine Stapelrichtung zumindest teilweise oder exakt in der zweiten Bewegungsrichtung und/oder in vertikaler Richtung verläuft, wobei die Stapelrichtung für unterschiedliche Produktströme vorzugsweise im Wesentlichen oder exakt parallel zueinander verläuft, wobei Produkte in verschiedenen Produktströmen bei der Stapelung besonders bevorzugt gleichzeitig und/oder parallel und/oder diskontinuierlich bewegt werden. Die Stapelrichtung ist im Rahmen dieser Beschreibung in Bezug auf ein produktformationsspezifisches Koordinatensystem definiert. Es wird davon ausgegangen, dass sich die relative Anordnung der Produkte innerhalb einer Produktformation nach der Stapelung nicht mehr verändert. Im Falle von quaderförmigen Produkten sind die Flächen mit den größten Abmessungen, d.h. gewöhnlich die Ober- und Unterseiten, bei der Stapelung vorzugsweise im Wesentlichen oder exakt horizontal ausgerichtet. Bei der Stapelung werden nun die quaderförmigen Produkte vorzugsweise mit den größten Flächen in Kontakt gebracht, sodass die gestapelte Produktformation eine kompakte und stabile Anordnung einnimmt. Diese Anordnung wird als Hochkantpäckchen bezeichnet. Es ist aber auch möglich, dass die quaderförmigen Produkte bei der Stapelung mit der mittleren oder kleinsten Fläche in Kontakt gebracht werden, wobei diese Anordnung als Flachpäckchen bezeichnet wird. Die Stapelung der Produkte in vertikaler Richtung, sodass die Produkte jeweils mit ihren größten Flächen auf einander liegen, ermöglicht besonders stabile und kompakte Produktformationen.
   ∘ Teilschritt B1-4: Anordnen der Produkte in jeweils im Wesentlichen oder exakt quaderförmigen Produktformationen, vorzugsweise mit einer Kantenlänge im Bereich von 6 bis 140 mm, beispielsweise als Flachpäckchen mit einer Längskantenlänge im Bereich von 44 bis 140 mm, einer Querkantenlänge im Bereich von 18 bis 40 mm und einer Hochkantenlänge im Bereich von 6 bis 16 mm, oder als Hochkantpäckchen mit einer Längskantenlänge im Bereich von 44 bis 140 mm, einer Querkantenlänge im Bereich von 18 bis 30 mm und einer Hochkantenlänge im Bereich von 12 bis 25 mm, wobei die im Wesentlichen oder exakt quaderförmigen Produktformationen bevorzugt durch ein, zwei- oder mehrreihiges und/oder kontaktierendes Anordnen im Wesentlichen oder exakt quaderförmiger Produkte entlang einer Geraden ausgebildet werden. Derartige Produktformationen sind für die Bearbeitung in einem sogenannten Hochleistungs-Stangenpacker als Sekundärverpackungseinrichtung besonders gut geeignet.
- Teilschritt B2: Ausgliederung von Produkten oder Produktformationen aus der Mehrzahl von Produktströmen, vorzugsweise aus dem für jeden Produktstrom eigenen Stapelmagazin, bevorzugt abwechselnd (z.B. bei einreihigen Produktformationen) oder gleichzeitig (z.B. bei zweireihigen Produktformationen) und/oder nach einer sich wiederholenden Reihenfolge, besonders bevorzugt jeweils durch eine Bewegung in einer dritten Bewegungsrichtung, die zumindest teilweise oder exakt in horizontaler Richtung, beispielsweise quer oder senkrecht zur zweiten Bewegungsrichtung und/oder zur Stapelrichtung verläuft, wobei die dritte Bewegungsrichtung besonders bevorzugt in einer Ebene liegt, die im Wesentlichen senkrecht oder exakt senkrecht zu einer Ebene ausgerichtet ist, in welcher die erste Bewegungsrichtung liegt, wobei die dritten Bewegungsrichtungen für unterschiedliche Produktströme vorzugsweise im Wesentlichen entgegengesetzt oder exakt entgegengesetzt zueinander verlaufen. Auf diese Weise können die formstabilen, stapelförmigen Produktformationen vergleichsweise einfach bewegt und in den gemeinsamen Produktstrom eingegliedert werden.
- Teilschritt B3: Eingliederung von Produkten oder Produktformationen aus unterschiedlichen Produktströmen in den gemeinsamen Produktstrom, vorzugsweise abwechselnd (z.B. bei einreihigen Produktformationen) oder gleichzeitig (z.B. bei zweireihigen Produktformationen) und/oder nach einer sich wiederholenden Reihenfolge, bevorzugt aus unterschiedlichen oder entgegengesetzten Richtungen bezogen auf eine Bewegungsrichtung oder Bewegungsebene der Produkte oder Produktformationen in dem gemeinsamen Produktstrom. Diese Merkmale erleichtern die Zusammenführung der Mehrzahl von Produktströmen zu einem gemeinsamen Produktstrom.
- Teilschritt B4: Förderung der Produkte oder Produktformationen innerhalb des gemeinsamen Produktstroms entlang einer zumindest abschnittsweise kreisförmigen Bewegungsbahn, vorzugsweise diskontinuierlich. Dadurch können die Produkte oder Produktformationen optimal für die Zuführung zu einer nachgeschalteten Sekundärverpackungseinrichtung positioniert werden.
- Teilschritt B5: Drehung der Produkte oder Produktformationen um einen vorgegebenen Winkel, vorzugsweise um eine senkrecht zur Stapelrichtung verlaufende Achse, bevorzugt um 90° zwischen einer Aufnahmeposition und einer Ausgabeposition, besonders bevorzugt während des Teilschritts B3. Vorzugsweise werden die Produkte oder Produktformationen einer nachgeschalteten Sekundärverpackungseinrichtung derart zugeführt, dass die Produkte oder Produktformationen zur Zuführung des Sekundärpackmittels in stabiler Anordnung ausgerichtet sind, wobei die größten Flächen der Produkte oder Produktformationen vorzugsweise nach oben und unten weisen. In dieser Ausrichtung können die Produkte oder Produktformationen "liegend" im Falteinschlag mit Sekundärpackmittel schlauchförmig umwickelt werden. Eine gestapelte Produktformation wird zur Vorbereitung der Sekundärverpackung vorzugsweise derart gedreht, dass die Stapelrichtung bzw. Stapelachse horizontal ausgerichtet ist und das Sekundärpackmittel vorzugsweise in radialer Richtung bzw. senkrecht zur "liegenden" Stapelachse zugeführt werden kann.
- Teilschritt B6: Förderung der Produkte oder Produktformationen innerhalb des gemeinsamen Produktstroms entlang einer zumindest abschnittsweise linearen und/oder horizontalen Bewegungsbahn, vorzugsweise entlang oder parallel oder radial zur Drehachse in Teilschritt B5. Dieses Merkmal begünstigt eine optimale Zuführung der Produkte oder Produktformationen zu einer nachgeschalteten Sekundärverpackungseinrichtung.

Es kann aber auch von Nutzen sein, wenn Schritt C wenigstens einen der folgenden Teilschritte aufweist:
- Teilschritt C1: Förderung der Produkte oder Produktformationen in dem gemeinsamen Produktstrom, vorzugsweise kontinuierlich oder intermittierend und/oder mit konstanter Vorschubgeschwindigkeit, bevorzugt entlang einer zumindest abschnittsweise linearen und/oder horizontalen Bewegungsbahn. Dieser Teilschritt kann sich als sinnvoll erweisen, um nach einer ggf. diskontinuierlichen Gruppierung der Produkte in Produktformationen in Vorbereitung der Sekundärverpackung wieder auf ein kontinuierliches Arbeitsprinzip umzustellen.
- Teilschritt C2: Zuführung von Sekundärpackmittel zu den Produkten oder Produktformationen in dem gemeinsamen Produktstrom, vorzugsweise von einem kontinuierlichen Packmittelstrom, wobei das Sekundärpackmittel bevorzugt vor oder nach der Zuführung zu einem Produkt oder einer Produktformation vereinzelt wird. Die Vereinzelung des Sekundärpackmittels vor der Zuführung zu dem Produkt oder der Produktformation erlaubt eine höhere Flexibilität bei der Faltung des Packmittels. Wird das Sekundärpackmittel erst nach der Zuführung zu dem Produkt oder der Produktformation vereinzelt bzw. von dem Packmittelstrom getrennt, so ist zumindest der noch mit dem Packmittelstrom verbundene Teil des Packmittels während der Zuführung fixiert und bedarf keiner eigenen Handhabung.
- Teilschritt C3: Sekundärverpackung der Produkte oder Produktformationen in dem gemeinsamen Produktstrom, vorzugsweise jeweils in einem vereinzelten Sekundärpackmittel, bevorzugt entlang einer zumindest abschnittsweise kreisförmigen oder linearen Bewegungsbahn. Eine zumindest abschnittsweise kreisförmige Bewegungsbahn ermöglicht auf einfache Weise eine schlauchförmige Umwicklung der Produkte oder Produktformationen. Die Sekundärverpackung erfolgt beispielsweise in Päckchen-, Seiten- oder Brieffaltung. Das Sekundärverpackung ist vorzugsweise luftdicht, faltbar und siegelfähig (heiß oder kalt).
- Teilschritt C4: Versiegelung der Sekundärverpackung in dem gemeinsamen Produktstrom, vorzugsweise bei kontinuierlicher oder intermittierender Förderung der Produkte oder Produktformationen, bevorzugt entlang einer zumindest abschnittsweise linearen und/oder horizontalen Bewegungsbahn. Dieser Teilschritt erlaubt eine besonders dichte Sekundärverpackung.

Im Hinblick auf die Vorrichtung wird die Aufgabe der Erfindung gelöst durch die Vorrichtung nach Anspruch 5. Diese Vorrichtung zur Verpackung von, insbesondere kleinstückigen, Produkten, vorzugsweise Süßwaren, wie Hart- oder Weichkaramellen, Pralinen oder dergleichen, insbesondere zur Durchführung des Verfahrens nach einer der vorangehenden Ausführungen, umfasst die folgenden Einrichtungen:
- Eine Primärverpackungseinrichtung zur Primärverpackung der Produkte in einer Mehrzahl von Produktströmen.
- Eine Transfereinrichtung zur Zusammenführung der Mehrzahl von Produktströmen zu einem gemeinsamen Produktstrom.
- Eine Sekundärverpackungseinrichtung zur Sekundärverpackung von primärverpackten und in Produktformationen gruppierten Produkten in dem gemeinsamen Produktstrom.

Im Hinblick auf die erfindungsgemäße Vorrichtung gelten die zu dem erfindungsgemäßen Verfahren genannten Vorteile analog.

Es kann ebenso sinnvoll sein, dass die Primärverpackungseinrichtung wenigstens eines der folgenden Merkmale aufweist:
- Wenigstens eine Materialzuführeinrichtung zur Zuführung eines Materialvorrats zur Vereinzelung von Produkten, vorzugsweise jeweils eine Zuführeinrichtung pro Produktstrom oder eine gemeinsame Zuführeinrichtung für die Mehrzahl von Produktströmen.
- Wenigstens eine Vereinzelungseinrichtung zur Vereinzelung von Produkten, vorzugsweise jeweils eine Vereinzelungseinrichtung pro Produktstrom oder eine gemeinsame Vereinzelungseinrichtung für die Mehrzahl von Produktströmen. Für strangförmige hergestellte Produkte wie Kaugummi, Kaubonbon oder Toffee eignet sich insbesondere eine Schneideinrichtung als Vereinzelungseinrichtung.
- Wenigstens eine Primärpackmittelzuführeinrichtung zur Zuführung von Primärpackmittel zu den Produkten, vorzugsweise zur Zuführung jeweils eines Primärpackmittelstroms zu jeweils einem Produktstrom oder zur Zuführung eines gemeinsamen Primärpackmittelstroms zu der Mehrzahl von Produktströmen.
- Wenigstens eine Primärverpackungseinheit zur Primärverpackung jedes vereinzelten Produkts, vorzugsweise umfassend eine Vielzahl von Produktaufnahmen und/oder Packmittelaufnahmen, bevorzugt jeweils eine Primärverpackungseinheit pro Produktstrom oder eine gemeinsame Primärverpackungseinheit für die Mehrzahl von Produktströmen, wobei die Primärverpackungseinheit besonders bevorzugt als (rotierender) Packkopf oder Greiferkopf ausgebildet ist.
- Wenigstens eine Versiegelungseinrichtung zur Versiegelung der Primärverpackung in der Mehrzahl von Produktströmen, vorzugsweise jeweils eine Versiegelungseinrichtung pro Produktstrom oder eine gemeinsame Versiegelungseinrichtung für die Mehrzahl von Produktströmen.

Es kann aber auch vorteilhaft sein, wenn die Transfereinrichtung wenigstens eines der folgenden Merkmale aufweist:
- Wenigstens eine Gruppierungseinrichtung zur Gruppierung von primärverpackten Produkten in Produktformationen aus vorzugsweise jeweils zwei bis sechzehn Produkten, bevorzugt durch Veränderung der Bewegungsrichtung und/oder der Bewegungsgeschwindigkeit von Produkten, besonders bevorzugt im Einzeltakt und/oder gleichzeitig in der Mehrzahl der Produktströme, wobei die Gruppierungseinrichtung besonders bevorzugt als doppelter Hochstößer ausgebildet ist.
- Wenigstens ein Magazin zur Aufbewahrung der in Produktformationen gruppierten Produkte, vorzugsweise jeweils ein eigenes Stapelmagazin für jeden Produktstrom, bevorzugt derart, dass eine Stapelrichtung zumindest teilweise oder exakt in der zweiten Bewegungsrichtung und/oder in vertikaler Richtung verläuft.
- Wenigstens eine Betätigungseinrichtung zur Überführung von Produkten oder Produktformationen aus der Mehrzahl von Produktströmen in den gemeinsamen Produktstrom, wobei die Betätigungseinrichtung vorzugsweise wenigstens eines der folgenden Merkmale aufweist:
   ∘ Die Betätigungseinrichtung umfasst für jeden Produktstrom zumindest einen oder exakt einen Querschieber, der vorzugsweise dem jeweiligen Stapelmagazin des Produktstroms zugeordnet ist.
   ∘ Die Betätigungseinrichtung ist ausgebildet, um die Produkte oder Produktformationen nach einer vorgegebenen Reihenfolge aus der Mehrzahl von Produktströmen auszugliedern und/oder in den gemeinsamen Produktstrom einzugliedern.
   ∘ Die Betätigungseinrichtung, insbesondere jeder Querschieber davon, ist ausgebildet zur Ausführung einer sich wiederholenden Zuführ- und Rückführbewegung, wobei die Produkte oder Produktformationen in der Zuführbewegung von einer ersten Position, vorzugsweise einer Stapelposition, in eine zweite Position, vorzugsweise einer Übergabeposition an eine nachgeschaltete Transporteinrichtung, bewegt werden, wobei die Rückführbewegung die erste Position derart umgeht (beispielsweise nach oben ausweicht), dass die erste Position während der Rückführbewegung der Betätigungseinrichtung mit anderen Produkten oder Produktformationen besetzt werden kann, um diese in einer weiteren Zuführbewegung in die zweite Position zu bewegen.
- Wenigstens eine Transporteinrichtung zum Transport der Produkte oder Produktformationen innerhalb des gemeinsamen Produktstroms, wobei die Transporteinrichtung vorzugsweise wenigstens eines der folgenden Merkmale aufweist:
   ∘ Die Transporteinrichtung ist ausgebildet zur Förderung der Produkte oder Produktformationen innerhalb des gemeinsamen Produktstroms entlang einer zumindest abschnittsweise kreisförmigen Bewegungsbahn.
   ∘ Die Transporteinrichtung ist ausgebildet zur Drehung der Produkte oder Produktformationen innerhalb des gemeinsamen Produktstroms um einen vorgegebenen Winkel, vorzugsweise um 90°, bevorzugt während der Förderung entlang einer zumindest abschnittsweise kreisförmigen Bewegungsbahn.
   ∘ Die Transporteinrichtung ist zwischen zwei unterschiedlichen Produktströmen angeordnet, vorzugsweise mittig, bevorzugt zwischen zwei Stapelmagazinen unterschiedlicher Produktströme.
   ∘ Die Transporteinrichtung ist ausgebildet, um Produkte oder Produktformationen nach einer vorgegebenen Reihenfolge, beispielsweise abwechselnd (z.B. bei einreihiger Produktformation) oder gleichzeitig (z.B. bei zweireihiger Produktformation) und/oder aus unterschiedlichen, vorzugsweise entgegengesetzten Richtungen, aufzunehmen.
   ∘ Die Transporteinrichtung ist als Taschenrad ausgebildet.
   ∘ Die Transporteinrichtung ist ausgebildet, um sich mit vorgegebener Taktung zu drehen, bevorzugt um eine horizontale Drehachse. Vorzugsweise ist die Drehbewegung der Transporteinrichtung derart auf die Zuführbewegung/en der Betätigungseinrichtung/en abgestimmt, dass die Transporteinrichtung die von jeweils einer Betätigungseinrichtung zugeführten Produkte oder Produktformationen aufnimmt.
   ∘ Die Transporteinrichtung ist ausgebildet, um gestapelte Produktformationen derart aufzunehmen und/oder auszugeben, dass eine Stapelrichtung der Produktformationen im Wesentlichen oder exakt senkrecht zu einer Drehachse der Transporteinrichtung weist.
   ∘ Die Transporteinrichtung umfasst eine Vielzahl von Aufnahmen für Produkte oder Produktformationen, vorzugsweise vier oder acht.
   ∘ Die Transporteinrichtung umfasst, vorzugsweise für jede Aufnahme, wenigstens eine Einheit, um die zugeführten Produkte oder Produktformationen zumindest temporär, insbesondere während des Transports, vorderseitig und/oder endseitig zu fixieren, wobei vorzugsweise wenigstens eine der Einheiten verstellbar ist, um wenigstens eine Aufnahme der Transporteinrichtung wahlweise zu öffnen oder zu verschließen und/oder die Produkte oder Produktformationen in wenigstens einer Aufnahme zu klemmen.
   ∘ Die Transporteinrichtung ist als Transportkette ausgebildet.
   ∘ Die Transporteinrichtung umfasst eine Einrichtung, um die Produkte oder Produktformationen entlang einer linearen und/oder horizontalen Bewegungsrichtung, vorzugsweise entlang oder parallel oder radial zu einer Drehachse (des Taschenrades aus dem Taschenrad) auszuschieben.

Es kann aber auch sinnvoll sein, wenn die Sekundärverpackungseinrichtung wenigstens eines der folgenden Merkmale aufweist:
- Wenigstens eine Produktzuführeinrichtung zur Zuführung von Produkten oder Produktformationen zu einer Sekundärverpackungseinheit in dem gemeinsamen Produktstrom, vorzugsweise entlang einer linearen und/oder horizontalen Bewegungsbahn.
- Wenigstens eine Sekundärpackmittelzuführeinrichtung zur Zuführung von Sekundärpackmittel zu den Produkten oder Produktformationen, vorzugsweise zur Zuführung von einem Sekundärpackmittelstrom zu dem gemeinsamen Produktstrom. Das Sekundärpackmittel wird vorzugsweise im Wesentlichen radial oder exakt radial zu einer Achse, beispielsweise der Stapelachse bzw. Stapelrichtung, der Produktformation zugeführt.
- Wenigstens eine Sekundärverpackungseinheit zur Sekundärverpackung von Produkten oder Produktformationen in dem gemeinsamen Produktstrom, vorzugsweise umfassend eine Vielzahl von Produktaufnahmen und/oder Packmittelaufnahmen, wobei die Sekundärverpackungseinheit bevorzugt als (rotierender) Packkopf oder Greiferkopf ausgebildet ist.
- Wenigstens eine Versiegelungseinrichtung zur Versiegelung der Sekundärverpackung in dem gemeinsamen Produktstrom, vorzugsweise entlang einer linearen und/oder horizontalen Bewegungsbahn.

Ein unabhängiger Aspekt der Erfindung betrifft eine Transfereinrichtung zur Zusammenführung einer Mehrzahl von Produktströmen zu einem gemeinsamen Produktstrom in einem Verfahren oder einer Vorrichtung zur Verpackung von, insbesondere kleinstückigen, Produkten, wie Hart- oder Weichkaramellen, Kaugummi, Pralinen oder dergleichen, insbesondere in einem Verfahren nach einem der Ansprüche 1 bis 5 und/oder in einer Vorrichtung nach einem der Ansprüche 6 bis 8, wobei die Transfereinrichtung vorzugsweise wenigstens eines der Merkmale des Anspruchs 7 aufweist.

Die mit dem erfindungsgemäßen Verfahren und der erfindungsgemäßen Vorrichtung primär zu verpackenden Produkte haben beispielsweise im Wesentlichen oder exakt eine rechteckige Bodenfläche mit einer Kantenlänge im Bereich von 4 bis 40 mm. Diese Produkte sind vorzugsweise würfel- oder quaderförmig mit einer Kantenlänge im Bereich von 4 bis 40 mm, wobei eine Längskantenlänge vorzugsweise im Bereich von 15 bis 40 mm liegt, eine Querkantenlänge vorzugsweise im Bereich von 12 bis 25 mm liegt und eine Hochkantenlänge vorzugsweise im Bereich von 4 bis 15 mm liegt.

Die mit dem erfindungsgemäßen Verfahren und der erfindungsgemäßen Vorrichtung primär zu verpackenden und/oder primärverpackten Produkte sind vorzugsweise identisch oder im Wesentlichen identisch im Hinblick auf wenigstens eines der folgenden Merkmale: Form, Abmessungen, Inhalt des Produkts; Form, Abmessungen, Inhalt, Material, Falt- und/oder Einschlagart der Verpackung, beispielsweise Brieffaltung, Bodenfaltung, Seitenfaltung.

Die mit dem erfindungsgemäßen Verfahren und der erfindungsgemäßen Vorrichtung sekundär zu verpackenden und/oder sekundärverpackten Produktformationen sind vorzugsweise identisch oder im Wesentlichen identisch im Hinblick auf wenigstens eines der folgenden Merkmale: Anzahl, Ausrichtung und/oder relative Anordnung der primärverpackten Produkte; Form, Abmessungen, Inhalt, Material, Falt- und/oder Einschlagart der Sekundär-Verpackung, wobei die primärverpackten Produkte innerhalb jeder sekundärverpackten Produktformation vorzugsweise in Richtung der kleinsten Produktabmessung einander kontaktierend einreihig oder auch zwei- oder mehrreihig angeordnet sind.

Weitere vorteilhafte Weiterbildungen der Erfindung ergeben sich durch beliebige Kombinationen der in der Beschreibung sowie den Ansprüchen und Figuren offenbarten Merkmale.

### Kurze Beschreibung der Figuren

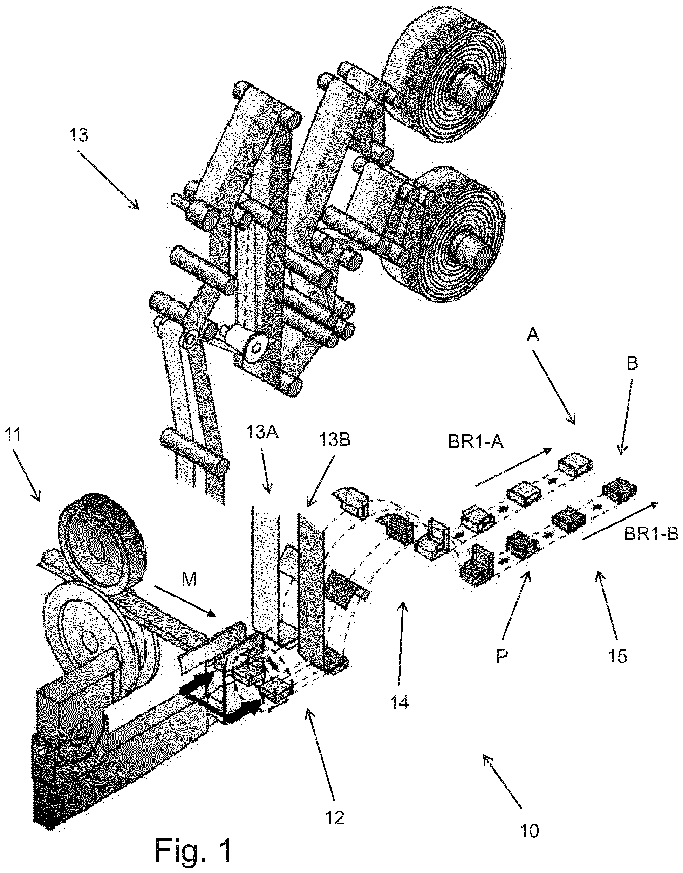

- Figur 1: zeigt eine schematische und perspektivische Ansicht einer Primärverpackungseinrichtung der erfindungsgemäßen Verpackungsvorrichtung zur Darstellung des Schritts A des erfindungsgemäßen Verpackungsverfahrens, wobei vereinzelte Produkte in zwei parallelen Produktströmen in einem mit einer Mehrzahl von Produktund Packmittelaufnahmen versehenen Entnahmerad unter Zuführung von Primärpackmittel primärverpackt werden.

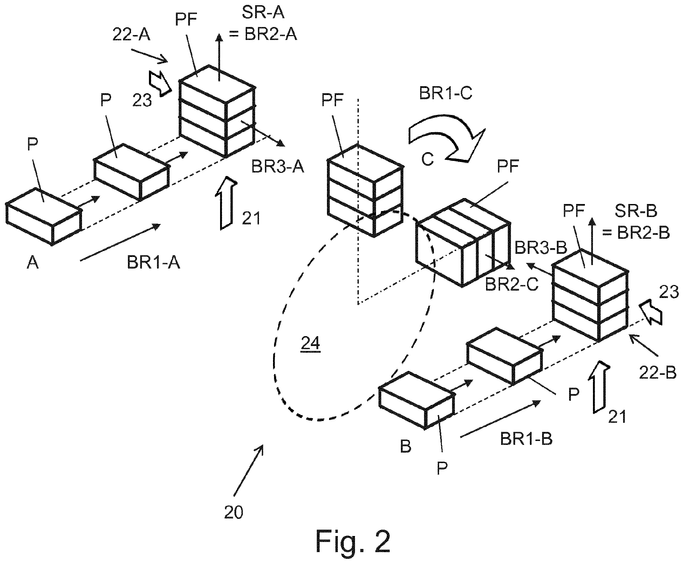

- Figur 2: zeigt eine schematische und perspektivische Ansicht einer Transfereinrichtung der erfindungsgemäßen Verpackungsvorrichtung zur Darstellung des Schritts B des erfindungsgemäßen Verpackungsverfahrens, wobei die Produkte in den zwei parallelen Produktströmen zunächst in Produktformationen gruppiert werden und anschließend die Produktformationen abwechselnd oder gleichzeitig aus den beiden parallelen Produktströmen in einen mittig dazwischen angeordneten, gemeinsamen Produktstrom eingegliedert werden.

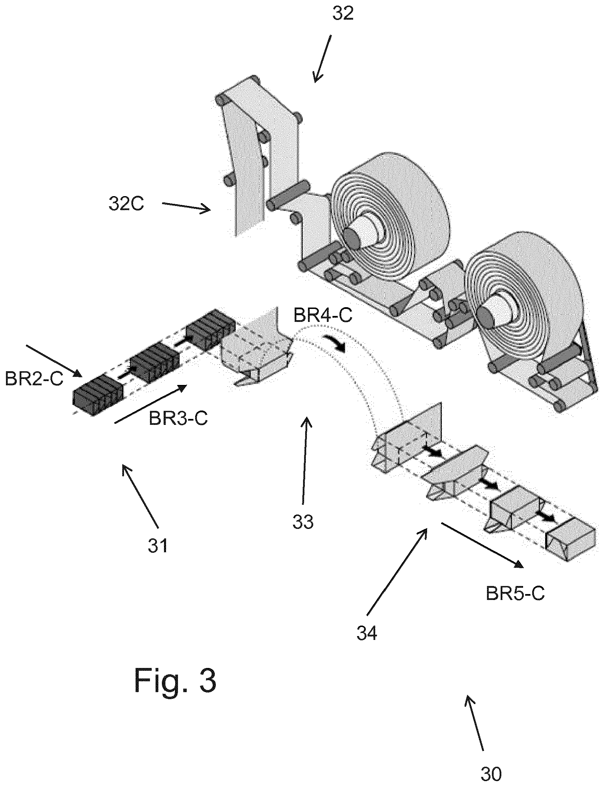

- Figur 3: zeigt eine schematische und perspektivische Ansicht einer Sekundärverpackungseinrichtung der erfindungsgemäßen Verpackungsvorrichtung zur Darstellung des Schritts C des erfindungsgemäßen Verpackungsverfahrens, wobei die Produktformationen in einem gemeinsamen Produktstrom unter Zuführung von Sekundärpackmittel sekundärverpackt werden.

### Detaillierte Beschreibung der bevorzugten Ausführungsbeispiele

Das bevorzugte Ausführungsbeispiel des erfindungsgemäßen Verfahrens bzw. der erfindungsgemäßen Vorrichtung wird nachstehend mit Bezug auf die Figuren 1 bis 3 im Detail beschrieben.

### Primärverpackunaseinrichtuna 10 - Schritt A (Figur 1)

Schritt A sowie die Funktionsweise und die Ausstattungsmerkmale der Primärverpackungseinrichtung 10 werden nachstehend mit Bezug auf Figur 1 im Detail beschrieben:

In zwei gesonderten Produktströmen A, B werden jeweils zwei Produkte P gleichzeitig mittels eines doppelten Messers (Vereinzelungseinrichtung) 12 von einem über eine Materialzuführeinrichtung 11 zugeführten, gemeinsamen Materialvorrat M abgeschnitten und zweibahnig in den Packköpfen eines Entnahmerads (Verpackungseinheit) 14 im Falteinschlag verpackt sowie in einer nachgeschalteten Versiegelungseinrichtung 15 versiegelt. Vorzugsweise wird auf Formrollen und ein oszillierendes Messer als Vereinzelungseinrichtung 12 zurückgegriffen. Je nach Produkt ist als Materialzuführeinrichtung 11 eine Kombination mit Kegelroller und Ausziehmaschine (Toffees, Hart- und Weichkaramellen) oder Extruder und Kühltunnel (Kaugummi- und Bubble-Gum-Produkte, Kaubonbons) vorsehbar. Die primärverpackten Produkte P werden in der Versiegelungseinrichtung 15 in den beiden Produktströmen A, B in zwei parallelen und horizontalen Bewegungsrichtungen BR1-A, BR1-B gefördert.

Unter Verwendung von Zentrier- und Spannvorrichtungen für Packmittelrollen werden den vereinzelten Produkten P in den unterschiedlichen Produktströmen A, B jeweils eigens zugeordnete Packmittelströme 13A, 13B zugeführt. Bei einem erforderlichen Packmittelrollenwechsel kann ein automatisches Spleißen zur Vermeidung von Stillstandszeiten erfolgen. Über Packmittelmesser werden die Packmittelbahnen mit doppelter Breite zunächst mittig getrennt und die Bahnen auf Abstand gebracht. Anschließend werden von den mittig getrennten Packmittelbahnen vorzugsweise rechteckige oder quadratische Packmittelzuschnitte abgetrennt und den vereinzelten, vorzugsweise quaderförmigen Produkten P vereinzelt zugeführt.

Die erfindungsgemäße Primärverpackungseinrichtung 10 verfügt vorzugsweise über eine Servosteuerung mit SPS-Funktionen und/oder einen servogetriebenen Packmittelabzug.

Die Vorschubgeschwindigkeit der Produkte P und/oder Packmittel in den beiden parallelen Produktströmen A, B und/oder Packmittelströmen 13A, 13B wird vorzugsweise elektronisch geregelt.

Als Packmittel kommen vorzugsweise alle faltbaren, luftdichten und/oder siegelfähigen Packmittel, beispielsweise Wachspapier, Zellglas und Aluminium, gegebenenfalls mit Papier kaschiert, infrage.

Das Verpacken der Produkte P erfolgt vorzugsweise im Falteinschlag, insbesondere in Seitenfaltung, kann aber auch mit anderen Falt-/Einschlagarten erfolgen.

Die Versiegelungseinrichtung 15 der Primärverpackungseinrichtung 10 bildet die Schnittstelle zur nachgeordneten Transfereinrichtung 20. Die Produkte P werden in beiden Produktströmen A, B gleichzeitig schrittweise durch die Versiegelungseinrichtung 15 gefördert.

### Transfereinrichtung 20 -Schritt B (Figur 2)

In Schritt B des erfindungsgemäßen Verpackungsverfahrens, der in der Transfereinrichtung 20 der erfindungsgemäßen Verpackungsvorrichtung ausgeführt wird, werden die primärverpackten Produkte P in den beiden parallelen Produktströmen A, B zunächst hochkant mit bis zu 1000 Produkten pro Bahn und Minute in Stangen mit 2 bis 16 Stück angestapelt. Dabei werden die Bewegungsgeschwindigkeiten und Bewegungsrichtungen BR1-A, BR1-B zweier Produkte P in verschiedenen Produktströmen A, B zeitgleich verändert. Die angestapelten Stangen werden nachstehend als Produktformationen PF bezeichnet.

Ein durch Pfeile schematisch dargesteller, doppelter Hochstößer (Gruppiereinrichtung) 21 stapelt die Produkte P dabei im Einzeltakt gleichzeitig aus der letzten Transportposition innerhalb der beiden Produktströme A, B der Primärverpackungseinrichtung 10 in zwei Stapelmagazinen 22-A, 22-B in vertikalen und parallelen Stapelrichtungen SR-A, SR-B an. Dabei werden die Produkte P jeweils aus den horizontalen und parallelen, ersten Bewegungsrichtungen BR1-A, BR1-B bei gleichzeitiger Änderung der Bewegungsgeschwindigkeit um 90° in vertikaler Richtung nach oben in die beiden parallelen zweiten Bewegungsrichtungen BR2-A, BR2-B bzw. Stapelrichtungen SR-A, SR-B umgelenkt. In diesem Zusammenhang kann beispielsweise von einer kontinuierlichen Förderung der Produkte P auf eine diskontinuierliche Förderung der Produkte P umgestellt werden, wenngleich im vorliegenden Ausführungsbeispiel eine diskontinuierliche Transportbewegung dargestellt ist.

Jeweils seitlich jedes Stapelmagazins 22-A, 22-B ist pro Produktstrom A, B ein durch einen Pfeil schematisch dargestellter Querschieber 23 angeordnet, der die gruppierte Produktformation PF horizontal aus dem Stapelmagazin 22-A, 22-B schiebt. Die Zuführbewegung des Querschiebers 23 in Richtung des gemeinsamen Produktstroms C erfolgt abwechselnd vorn zu hinten oder gleichzeitig bei zweireihigen Produktformationen, während die Rückbewegung des Querschiebers 23 nach oben hin ausweicht, um dem nachfolgenden Produkten P im wieder zu befüllenden Stapelmagazin 22-A, 22-B Freiraum zu bieten und eine hohe Leistung zu gewährleisten.

Die erfindungsgemäße Transfereinrichtung 20 führt die primärverpackten Produkte P aus der Mehrzahl von Produktströmen A, B in Produktformationen PF zur nachgelagerten Sekundärverpackung in dem gemeinsamen Produktstrom C zusammen und stellt gleichsam einen realisierbaren Ansatz für die zweibahnig bzw. mehrbahnig getaktet arbeitende Verpackungsvorrichtung von bis zu 2000 Produkten pro Minute dar.

Über die Querschieber 23 werden die Produktformationen PF abwechselnd oder gleichzeitig bei zweireihigen Produktformationen aus den beiden Stapelmagazinen 22-A, 22-B in horizontalen, dritten Bewegungsrichtungen BR3-A, BR3-B in ein mittig angeordnetes Magazin-Taschenrad 24, symbolisch dargestellt durch einen gestrichelten Kreis, eingestoßen. Im Taschenrad 24 sind zumindest für die Produktformationen PF, die von dem in Blickrichtung hinteren Produktstrom A in das Taschenrad 24 geschoben werden, aktive bzw. bewegbare Produktanschläge (nicht dargestellt) vorzusehen, während für die Endposition der Produktformationen PF beim Einschieben aus dem in Blickrichtung vorderen Produktstrom B feste Anschläge im Taschenrad 24 zur Anwendung kommen können. Alternativ kann auch eine bewegliche Sperre neben dem Taschenrad 24 angeordnet werden, welche die Endposition der Produktformation PF beim Einschieben aus dem in Blickrichtung hinteren Produktstrom A sicherstellt.

Das Taschenrad 24 kann - je nach Formatbereich - 4 oder 8-teilig sein und mit beweglichen Kläppchen oder mit einer aktiven Klemmvorrichtung ausgestattet sein.

Das Taschenrad 24 schaltet in einem auf die Zuführ- bzw. Einschubbewegungen der Querschieber 23 abgestimmten Takt der Sekundärverpackungsmaschine und stößt die Produktformationen PF nach einer 90°-Drehung auf einer viertelkreisförmigen Bewegungsbahn BR1-C aus dem Taschenrad 24 aus und in/auf einer horizontalen Bewegungsrichtung bzw. -bahn BR2-C entlang oder parallel zur Drehachse in die Zuführkette des Hochleistungs-Stangenpackers (bzw. der Sekundärverpackungseinrichtung) 30 ein. Die Zuführkette des Hochleistungs-Stangenpackers verläuft im Winkel bzw. rechtwinklig zur Bewegungsrichtung BR2-C entlang einer weiteren horizontalen Bewegungsrichtung BR3-C. Zur Verkürzung der Zuführkette und Erhöhung der Dynamik können die Produkte P auch direkt in radialer Richtung entlang der Bewegungsrichtung BR3-C aus dem Taschenrad 24 in den Hochleistungs-Stangenpacker 30 eingestoßen werden.

### Sekundärverpackungseinrichtung 30 -Schritt C (Figur 3)

In Schritt C werden die in Produktformationen PF gruppierten Produkte P anschließend mit dem Hochleistungs-Stangenpacker 30 als Sekundärverpackungseinrichtung in dem gemeinsamen Produktstrom C sekundärverpackt. Gleichfalls sind weitere Maschinenkombinationen mit FlowPack oder Kartonierer realisierbar.

Die Funktionsweise und Ausstattungsmerkmale der Sekundärverpackungseinrichtung 30 werden nachstehend mit Bezug auf Figur 3 im Detail beschrieben.

Die Sekundärverpackungseinrichtung 30 dient zur Sekundärverpackung der durch die Produktzuführeinrichtung 31 auf einer horizontalen Bewegungsbahn BR3-C zugeführten, im vorliegenden Fall liegenden und als Hochkantpäckchen ausgebildeten Produktformationen PF in dem gemeinsamen Produktstrom C mit einem durch eine Sekundärpackmittelzuführeinrichtung 32 radial zur Stapelachse/-richtung der Produktformationen PF zugeführten Sekundärpackmittel 32C. Die Sekundärverpackungseinrichtung 30 arbeitet nach einem intermittierenden Arbeitsprinzip und umfasst eine Servosteuerung mit SPS-Funktionen zur Ermöglichung einer elektronischen Geschwindigkeitsregelung. Vorzugsweise werden auch der Packmittelabzug, das Packmittelmesser und die Produktzuführeinrichtung mit einem Servomotor angetrieben. Bei der Sekundärpackmittelzuführeinrichtung 32 kann optional eine Packmittelabschaltung bei Leertakt vorgesehen werden kann.

Unter Zuführung des Sekundärpackmittels 32C werden die Produktformationen PF in einem rotierenden Packkopf (Verpackungseinheit) 33 auf einer halbkreisförmigen Bewegungsbahn BR4-C im Falteinschlag mit Seitenfaltung sekundärverpackt und anschließend die Sekundärverpackung auf einer horizontalen Bewegungsbahn BR5-C in einer Versiegelungseinrichtung 34 mit automatischer Temperaturregelung versiegelt.

Bei Bedarf kann ein System zur Einbringung eines Aufreißfadens in der Sekundärverpackung vorgesehen werden, um das Öffnen der Sekundärverpackung zu erleichtern.

Zur Verringerung des Sekundärpackmittelverbrauchs und Produktausschuss können unvollständige Produktformationen PF vor der Sekundärverpackung über einen Fehlpackungsauswerfer aussortiert werden.

### Bezugszeichenliste

- A, B: Mehrzahl von Produktströmen
- BR1-A/B: Erste Bewegungsrichtung (horizontal)
- BR2-A/B: Zweite Bewegungsrichtung (vertikal)
- BR3-A/B: Dritte Bewegungsrichtung (horizontal)
- BR1-C: Kreisabschnittsförmige Bewegungsbahn
- BR2-C: Horizontale Bewegungsbahn
- BR3-C: Horizontale Bewegungsbahn
- BR4-C: Kreisabschnittsförmige Bewegungsbahn
- BR5-C: Horizontale Bewegungsbahn
- C: Gemeinsamer Produktstrom
- P: Produkt
- PF: Produktformation
- SR-A/B: Stapelrichtung
- 10: Primärverpackungseinrichtung
- 11: Materialzuführeinrichtung
- 12: Vereinzelungseinrichtung
- 13: Primärpackmittelzuführeinrichtung
- 13A/B: Primärpackmittel für Produktstrom A/B
- 14: Primärverpackungseinheit (Entnahmerad bzw. Packkopf)
- 15: Versiegelungseinrichtung
- 20: Transfereinrichtung
- 21: Gruppierungseinrichtung (Doppelter Hochstößer)
- 22-A/B: Stapelmagazin
- 23: Betätigungseinrichtung (Querschieber)
- 24: Transporteinrichtung (Magazin-Taschenrad)
- 30: Sekundärverpackungseinrichtung
- 31: Produktzuführeinrichtung
- 32: Sekundärpackmittelzuführeinrichtung
- 32C: Sekundärpackmittel für Produktstrom C
- 33: Sekundärverpackungseinheit (Packkopf)
- 34: Versiegelungseinrichtung

## Patentansprüche

1. Verfahren zur Verpackung von, insbesondere kleinstückigen, Produkten (P), vorzugsweise Süßwaren, wie Hart- oder Weichkaramellen, Kaugummi, Pralinen oder dergleichen, umfassend die folgenden Schritte:
a. Schritt A: Primärverpackung der Produkte (P) in einer Mehrzahl von Produktströmen (A, B).
b. Schritt B: Zusammenführung der Mehrzahl von Produktströmen (A, B) zu einem gemeinsamen Produktstrom (C).
c. Schritt C: Sekundärverpackung von primärverpackten und in Produktformationen (PF) gruppierten Produkten (P) in dem gemeinsamen Produktstrom (C).

2. Verfahren nach Anspruch 1, **dadurch gekennzeichnet, dass** Schritt A wenigstens einen der folgenden Teilschritte aufweist:
a. Teilschritt A1: Vereinzelung der Produkte (P), vorzugsweise aus jeweils einem eigenen Materialvorrat (M) für jeden Produktstrom (A, B) oder einem gemeinsamen Materialvorrat (M) für die Mehrzahl von Produktströmen (A, B).
b. Teilschritt A2: Förderung der vereinzelten Produkte (P) in der Mehrzahl von Produktströmen (A, B), vorzugsweise entlang zumindest abschnittsweise paralleler und/oder zumindest abschnittsweise kreisförmiger oder linearer Bewegungsbahnen, bevorzugt mit gleicher Vorschubgeschwindigkeit.
c. Teilschritt A3: Zuführung von Primärpackmittel zu den vereinzelten Produkten (P), vorzugsweise von jeweils einem eigenen Packmittelstrom (13A, 13B) zu jeweils einem Produktstrom (A, B) oder von einem gemeinsamen Packmittelstrom zu der Mehrzahl von Produktströmen (A, B), bevorzugt während des Teilschritts A2.
d. Teilschritt A4: Primärverpackung jedes vereinzelten Produkts (P), vorzugsweise jeweils in einem vereinzelten Primärpackmittel, wobei das Primärpackmittel bevorzugt vor oder nach der Zuführung zu dem Produkt (P) vereinzelt wird, besonders bevorzugt während des Teilschritts A2.
e. Teilschritt A5: Versiegelung der Primärverpackung in der Mehrzahl von Produktströmen (A, B), vorzugsweise bei Förderung der Produkte (P) entlang zumindest abschnittsweise paralleler und/oder linearer und/oder horizontaler Bewegungsbahnen, bevorzugt mit gleicher Vorschubgeschwindigkeit.

3. Verfahren nach einem der vorangehenden Ansprüche, **dadurch gekennzeichnet, dass** Schritt B wenigstens einen der folgenden Teilschritte aufweist:
a. Teilschritt B1: Gruppierung von primärverpackten Produkten (P) in Produktformationen (PF) aus vorzugsweise jeweils zwei bis sechzehn Produkten (P), bevorzugt unter Ausführung wenigstens eines der folgenden Teilschritte:
i. Teilschritt B1-1: Veränderung der Bewegungsgeschwindigkeit der Produkte (P) innerhalb der Mehrzahl von Produktströmen (A, B), vorzugsweise im Einzeltakt und/oder gleichzeitig für jeden Produktstrom (A, B).
ii. Teilschritt B1-2: Veränderung der Bewegungsrichtung der Produkte (P) innerhalb der Mehrzahl von Produktströmen (A, B) von einer ersten Bewegungsrichtung (BR1-A, BR1-B) zu einer zweiten Bewegungsrichtung (BR2-A, BR2-B), vorzugsweise im Einzeltakt und/oder gleichzeitig für jeden Produktstrom (A, B), wobei die zweite Bewegungsrichtung (BR2-A, BR2-B) vorzugsweise quer oder senkrecht zur ersten Bewegungsrichtung (BR1-A, BR1-B) und/oder zumindest teilweise oder exakt in vertikaler Richtung verläuft, wobei die zweite Bewegungsrichtung (BR2-A, BR2-B) für unterschiedliche Produktströme (A, B) vorzugsweise im Wesentlichen oder exakt parallel zueinander verläuft, wobei die Veränderung der Bewegungsrichtung bevorzugt gleichzeitig mit einer Veränderung der Vorschubgeschwindigkeit erfolgt.
iii. Teilschritt B1-3: Stapelung der Produkte (P) in wenigstens einem Stapelmagazin (22-A, 22-B), vorzugsweise in jeweils einem eigenen Stapelmagazin für jeden Produktstrom (A, B), bevorzugt derart, dass eine Stapelrichtung (SR-A, SR-B) zumindest teilweise oder exakt in der zweiten Bewegungsrichtung (BR2-A, BR2-B) und/oder in vertikaler Richtung verläuft, wobei die Stapelrichtung (SR-A, SR-B) für unterschiedliche Produktströme (A, B) vorzugsweise im Wesentlichen oder exakt parallel zueinander verläuft, wobei Produkte (P) in verschiedenen Produktströmen (A, B) bei der Stapelung besonders bevorzugt gleichzeitig und/oder parallel und/oder diskontinuierlich bewegt werden.
iv. Teilschritt B1-4: Anordnen der Produkte (P) in jeweils im Wesentlichen oder exakt quaderförmigen Produktformationen (PF), vorzugsweise mit einer Kantenlänge im Bereich von 6 bis 140 mm, beispielsweise als Flachpäckchen mit einer Längskantenlänge im Bereich von 44 bis 140 mm, einer Querkantenlänge im Bereich von 18 bis 40 mm und einer Hochkantenlänge im Bereich von 6 bis 16 mm, oder als Hochkantpäckchen mit einer Längskantenlänge im Bereich von 44 bis 140 mm, einer Querkantenlänge im Bereich von 18 bis 30 mm und einer Hochkantenlänge im Bereich von 12 bis 25 mm, wobei die im Wesentlichen oder exakt quaderförmigen Produktformationen (PF) bevorzugt durch einreihiges und/oder kontaktierendes Anordnen im Wesentlichen oder exakt quaderförmiger Produkte (P) entlang einer Geraden ausgebildet werden.
b. Teilschritt B2: Ausgliederung von Produkten (P) oder Produktformationen (PF) aus der Mehrzahl von Produktströmen (A, B), vorzugsweise aus dem für jeden Produktstrom (A, B) eigenen Stapelmagazin (22-A, 22-B), bevorzugt abwechselnd oder gleichzeitig und/oder nach einer sich wiederholenden Reihenfolge, besonders bevorzugt jeweils durch eine Bewegung in einer dritten Bewegungsrichtung (BR3-A, BR3-B), die zumindest teilweise oder exakt in horizontaler Richtung, beispielsweise quer oder senkrecht zur zweiten Bewegungsrichtung (BR2-A, BR2-B) und/oder zur Stapelrichtung (SR-A, SR-B) verläuft, wobei die dritte Bewegungsrichtung (BR3-A, BR3-B) besonders bevorzugt in einer Ebene liegt, die im Wesentlichen senkrecht oder exakt senkrecht zu einer Ebene ausgerichtet ist, in welcher die erste Bewegungsrichtung liegt (BR1-A, BR1-B), wobei die dritten Bewegungsrichtungen (BR3-A, BR3-B) für unterschiedliche Produktströme vorzugsweise im Wesentlichen entgegengesetzt oder exakt entgegengesetzt zueinander verlaufen.
c. Teilschritt B3: Eingliederung von Produkten (P) oder Produktformationen (PF) aus unterschiedlichen Produktströmen (A, B) in den gemeinsamen Produktstrom (C), vorzugsweise abwechselnd oder gleichzeitig und/oder nach einer sich wiederholenden Reihenfolge, bevorzugt aus unterschiedlichen oder entgegengesetzten Richtungen (BR3-A, BR3-B) bezogen auf eine Bewegungsrichtung (BR1-C) oder Bewegungsebene der Produkte (P) oder Produktformationen (PF) in dem gemeinsamen Produktstrom (C).
d. Teilschritt B4: Förderung der Produkte (P) oder Produktformationen (PF) innerhalb des gemeinsamen Produktstroms (C) entlang einer zumindest abschnittsweise kreisförmigen Bewegungsbahn (BR1-C), vorzugsweise diskontinuierlich.
e. Teilschritt B5: Drehung der Produkte (P) oder Produktformationen (PF) um einen vorgegebenen Winkel, vorzugsweise um eine senkrecht zur Stapelrichtung (SR-A, SR-B) verlaufende Achse, bevorzugt um 90° zwischen einer Aufnahmeposition und einer Ausgabeposition, besonders bevorzugt während des Teilschritts B4.
f. Teilschritt B6: Förderung der Produkte (P) oder Produktformationen (PF) innerhalb des gemeinsamen Produktstroms (C) entlang einer zumindest abschnittsweise linearen und/oder horizontalen Bewegungsbahn (BR-2C), vorzugsweise entlang oder parallel oder radial zur Drehachse in Teilschritt B5.

4. Verfahren nach einem der vorangehenden Ansprüche, **dadurch gekennzeichnet, dass** Schritt C wenigstens einen der folgenden Teilschritte aufweist:
a. Teilschritt C1: Förderung der Produktformationen (PF) in dem gemeinsamen Produktstrom (C), vorzugsweise kontinuierlich oder intermittierend und/oder mit konstanter Vorschubgeschwindigkeit, bevorzugt entlang einer zumindest abschnittsweise linearen und/oder horizontalen Bewegungsbahn (BR3-C).
b. Teilschritt C2: Zuführung von Sekundärpackmittel (32C) zu den Produktformationen (PF) in dem gemeinsamen Produktstrom (C), vorzugsweise von einem kontinuierlichen Packmittelstrom, wobei das Sekundärpackmittel (32C) bevorzugt vor oder nach der Zuführung zu einem Produkt (P) oder einer Produktformation (PF) vereinzelt wird.
c. Teilschritt C3: Sekundärverpackung der Produktformationen (PF) in dem gemeinsamen Produktstrom (C), vorzugsweise jeweils in einem vereinzelten Sekundärpackmittel (32C), bevorzugt entlang einer zumindest abschnittsweise kreisförmigen oder linearen Bewegungsbahn (BR4-C).
d. Teilschritt C4: Versiegelung der Sekundärverpackung in dem gemeinsamen Produktstrom (C), vorzugsweise bei kontinuierlicher oder intermittierender Förderung der Produktformationen (PF), bevorzugt entlang einer zumindest abschnittsweise linearen und/oder horizontalen Bewegungsbahn (BR5-C).

5. Vorrichtung zur Verpackung von, insbesondere kleinstückigen, Produkten (P), vorzugsweise Süßwaren, wie Hart- oder Weichkaramellen, Kaugummi, Pralinen oder dergleichen, insbesondere zur Durchführung des Verfahrens nach einem der vorangehenden Ansprüche, umfassend die folgenden Einrichtungen:
a. Eine Primärverpackungseinrichtung (10) zur Primärverpackung der Produkte (P) in einer Mehrzahl von Produktströmen (A, B).
b. Eine Transfereinrichtung (20) zur Zusammenführung der Mehrzahl von Produktströmen (A, B) zu einem gemeinsamen Produktstrom (C).
c. Eine Sekundärverpackungseinrichtung (3) zur Sekundärverpackung von primärverpackten und in Produktformationen (PF) gruppierten Produkten (P) in dem gemeinsamen Produktstrom (C).

6. Vorrichtung nach Anspruch 5, **dadurch gekennzeichnet, dass** die Primärverpackungseinrichtung (10) wenigstens eines der folgenden Merkmale aufweist:
a. Wenigstens eine Materialzuführeinrichtung (11) zur Zuführung eines Materialvorrats (M) zur Vereinzelung von Produkten (P), vorzugsweise jeweils eine Zuführeinrichtung (11) pro Produktstrom (A, B) oder eine gemeinsame Zuführeinrichtung (11) für die Mehrzahl von Produktströmen (A, B).
b. Wenigstens eine Vereinzelungseinrichtung (12) zur Vereinzelung von Produkten (P), vorzugsweise jeweils eine Vereinzelungseinrichtung (12) pro Produktstrom (A, B) oder eine gemeinsame Vereinzelungseinrichtung (12) für die Mehrzahl von Produktströmen (A, B).
c. Wenigstens eine Primärpackmittelzuführeinrichtung (13) zur Zuführung von Primärpackmittel zu den Produkten (P), vorzugsweise zur Zuführung jeweils eines Primärpackmittelstroms (13A, 13B) zu jeweils einem Produktstrom (A, B) oder zur Zuführung eines gemeinsamen Primärpackmittelstroms (13A, 13B) zu der Mehrzahl von Produktströmen (A, B).
d. Wenigstens eine Primärverpackungseinheit (14) zur Primärverpackung jedes vereinzelten Produkts (P), vorzugsweise umfassend eine Vielzahl von Produktaufnahmen und/oder Packmittelaufnahmen, bevorzugt jeweils eine Primärverpackungseinheit (14) pro Produktstrom (A, B) oder eine gemeinsame Primärverpackungseinheit (14) für die Mehrzahl von Produktströmen (A, B), wobei die Primärverpackungseinheit (14) besonders bevorzugt als Packkopf oder Greiferkopf ausgebildet ist.
e. Wenigstens eine Versiegelungseinrichtung (15) zur Versiegelung der Primärverpackung in der Mehrzahl von Produktströmen (A, B), vorzugsweise jeweils eine Versiegelungseinrichtung (15) pro Produktstrom (A, B) oder eine gemeinsame Versiegelungseinrichtung (15) für die Mehrzahl von Produktströmen (A, B).

7. Vorrichtung nach Anspruch 5 oder 6, **dadurch gekennzeichnet, dass** die Transfereinrichtung (20) wenigstens eines der folgenden Merkmale aufweist:
a. Wenigstens eine Gruppierungseinrichtung (21) zur Gruppierung von primärverpackten Produkten (P) in Produktformationen (PF) aus vorzugsweise jeweils zwei bis sechzehn Produkten (P), bevorzugt durch Veränderung der Bewegungsrichtung und/oder der Bewegungsgeschwindigkeit der Produkte (P), besonders bevorzugt im Einzeltakt und/oder gleichzeitig in der Mehrzahl von Produktströmen (A, B), wobei die Gruppierungseinrichtung (21) besonders bevorzugt als doppelter Hochstößer ausgebildet ist.
b. Wenigstens ein Magazin (22-A, 22-B) zur Aufbewahrung der in Produktformationen (PF) gruppierten Produkte (P), vorzugsweise jeweils ein eigenes Stapelmagazin (22-A, 22-B) für jeden Produktstrom (A, B), bevorzugt derart, dass eine Stapelrichtung (SR-A, SR-B) zumindest teilweise oder exakt in der zweiten Bewegungsrichtung (BR2-A, BR2-B) und/oder in vertikaler Richtung verläuft, wobei die Stapelrichtung (SR-A, SR-B) für unterschiedliche Produktströme (A, B) vorzugsweise im Wesentlichen oder exakt parallel zueinander verläuft, wobei die Produkte (P) bei der Stapelung besonders bevorzugt diskontinuierlich bewegt werden.
c. Wenigstens eine Betätigungseinrichtung (23) zur Überführung von Produkten (P) oder Produktformationen (PF) aus der Mehrzahl von Produktströmen (A, B) in den gemeinsamen Produktstrom (C), wobei die Betätigungseinrichtung (23) vorzugsweise wenigstens eines der folgenden Merkmale aufweist:
i. Die Betätigungseinrichtung (23) umfasst für jeden Produktstrom (A, B) zumindest einen oder exakt einen Querschieber, der vorzugsweise dem Stapelmagazin (22-A, 22-B) des Produktstroms (A, B) zugeordnet ist.
ii. Die Betätigungseinrichtung (23) ist ausgebildet, um die Produkte (P) oder Produktformationen (PF) nach einer vorgegebenen Reihenfolge aus der Mehrzahl von Produktströmen (A, B) auszugliedern und/oder in den gemeinsamen Produktstrom (C) einzugliedern.
iii. Die Betätigungseinrichtung (23), vorzugsweise jeder Querschieber davon, ist ausgebildet zur Ausführung einer sich wiederholenden Zuführ- und Rückführbewegung, wobei die Produkte (P) oder Produktformationen (PF) in der Zuführbewegung von einer ersten Position, vorzugsweise einer Stapelposition, in eine zweite Position, vorzugsweise einer Übergabeposition an eine nachgeschaltete Transporteinrichtung (24), bewegt werden, wobei die Rückführbewegung die erste Position derart umgeht, dass die erste Position während der Rückführbewegung der Betätigungseinrichtung (23) mit anderen Produkten (P) oder Produktformationen (PF) besetzt werden kann, um diese in einer weiteren Zuführbewegung in die zweite Position zu bewegen.
d. Wenigstens eine Transporteinrichtung (24) zum Transport der Produkte (P) oder Produktformationen (PF) innerhalb des gemeinsamen Produktstroms (C), wobei die Transporteinrichtung (24) vorzugsweise wenigstens eines der folgenden Merkmale aufweist:
i. Die Transporteinrichtung (24) ist ausgebildet zur Förderung der Produkte (P) oder Produktformationen (PF) innerhalb des gemeinsamen Produktstroms (C) entlang einer zumindest abschnittsweise kreisförmigen Bewegungsbahn (BR1-C).
ii. Die Transporteinrichtung (24) ist ausgebildet zur Drehung der Produkte (P) oder Produktformationen (PF) innerhalb des gemeinsamen Produktstroms (C) um einen vorgegebenen Winkel, vorzugsweise um 90°, bevorzugt während der Förderung entlang einer zumindest abschnittsweise kreisförmigen Bewegungsbahn (BR1-C).
iii. Die Transporteinrichtung (24) ist zwischen zwei unterschiedlichen Produktströmen (A, B) angeordnet, vorzugsweise mittig, bevorzugt zwischen zwei Stapelmagazinen (22-A, 22-B) unterschiedlicher Produktströme (A, B).
iv. Die Transporteinrichtung (24) ist ausgebildet, um Produkte (P) oder Produktformationen (PF) nach einer vorgegebenen Reihenfolge, beispielsweise abwechselnd oder gleichzeitig und/oder aus unterschiedlichen, vorzugsweise entgegengesetzten Richtungen (BR3-A, BR3-B) aufzunehmen.
v. Die Transporteinrichtung (24) ist als Taschenrad (24) ausgebildet.
vi. Die Transporteinrichtung (24) ist ausgebildet, um sich mit vorgegebener Taktung zu drehen, bevorzugt um eine horizontale Drehachse.
vii. Die Transporteinrichtung (24) ist ausgebildet, um gestapelte Produktformationen (PF) derart aufzunehmen und/oder auszugeben, dass eine Stapelrichtung (SR-A, SR-B) der Produktformationen (PF) im Wesentlichen oder exakt zu einer Drehachse der Transporteinrichtung (24) weist.
viii. Die Transporteinrichtung (24) umfasst eine Vielzahl von Aufnahmen für Produkte (P) oder Produktformationen (PF), vorzugsweise vier oder acht.
ix. Die Transporteinrichtung (24) umfasst, vorzugsweise für jede Aufnahme, wenigstens eine Einheit, um die zugeführten Produkte (P) oder Produktformationen (PF) zumindest temporär, insbesondere während des Transports, vorderseitig und/oder endseitig zu fixieren, wobei vorzugsweise wenigstens eine der Einheiten verstellbar ist, um wenigstens eine Aufnahme der Transporteinrichtung (24) wahlweise zu öffnen oder zu verschließen und/oder die Produkte (P) oder Produktformationen (PF) in wenigstens einer Aufnahme zu klemmen.
x. Die Transporteinrichtung (24) umfasst eine Einrichtung, um die Produkte (P) oder Produktformationen (PF) entlang einer linearen und/oder horizontalen Bewegungsrichtung (BR-2C), vorzugsweise entlang oder parallel oder radial zu einer Drehachse des Taschenrades aus dem Taschenrad auszuschieben.

8. Vorrichtung nach einem der Ansprüche 5 bis 7, **dadurch gekennzeichnet, dass** die Sekundärverpackungseinrichtung (30) wenigstens eines der folgenden Merkmale aufweist:
a. Wenigstens eine Produktzuführeinrichtung (31) zur Zuführung von Produktformationen (PF) zu einer Sekundärverpackungseinheit (33) in dem gemeinsamen Produktstrom (C), vorzugsweise entlang einer linearen und/oder horizontalen Bewegungsbahn (BR3-C).
b. Wenigstens eine Sekundärpackmittelzuführeinrichtung (32) zur Zuführung von Sekundärpackmittel zu den Produktformationen (PF), vorzugsweise zur Zuführung von einem Sekundärpackmittelstrom (32C) zu dem gemeinsamen Produktstrom (C).
c. Wenigstens eine Sekundärverpackungseinheit (33) zur Sekundärverpackung von Produktformationen (PF) in dem gemeinsamen Produktstrom (C), vorzugsweise umfassend eine Vielzahl von Produktaufnahmen und/oder Packmittelaufnahmen, wobei die Sekundärverpackungseinheit (33) bevorzugt als Packkopf oder Greiferkopf ausgebildet ist.
d. Wenigstens eine Versiegelungseinrichtung (34) zur Versiegelung der Sekundärverpackung in dem gemeinsamen Produktstrom (C), vorzugsweise entlang einer linearen und/oder horizontalen Bewegungsbahn (BR5-C).

9. Transfereinrichtung (20) zur Zusammenführung einer Mehrzahl von Produktströmen (A, B) zu einem gemeinsamen Produktstrom (C) in einem Verfahren oder einer Vorrichtung zur Verpackung von, insbesondere kleinstückigen, Produkten, wie Hart- oder Weichkaramellen, Kaugummi, Pralinen oder dergleichen, insbesondere in einem Verfahren nach einem der Ansprüche 1 bis 5 und/oder in einer Vorrichtung nach einem der Ansprüche 6 bis 8, wobei die Transfereinrichtung (20) vorzugsweise wenigstens eines der Merkmale des Anspruchs 7 aufweist.
